(19) Europäisches Patentamt
European Patent Office
Office européen des brevets

(11) EP 0 476 885 B1

(12) **EUROPEAN PATENT SPECIFICATION**

(45) Date of publication and mention of the grant of the patent:
**08.04.1998 Bulletin 1998/15**

(51) Int. Cl.$^6$: **A01N 31/06**

(21) Application number: **91308063.6**

(22) Date of filing: **03.09.1991**

# (54) Insect repellents

Mittel zur Insektenabwehr

Agents répulsifs contre les insectes

(84) Designated Contracting States:
**DE ES FR GB IT**

(30) Priority: **18.09.1990 JP 249420/90**
**25.03.1991 JP 86080/91**

(43) Date of publication of application:
**25.03.1992 Bulletin 1992/13**

(73) Proprietor:
**SUMITOMO CHEMICAL COMPANY LIMITED**
**Osaka-shi, Osaka 541 (JP)**

(72) Inventors:
- **Shono, Yoshinori**
**Ibaraki-shi (JP)**
- **Watanabe, Keisuke**
**Ashiya-shi (JP)**
- **Sekihachi, Hiroko**
**Toyonaka-shi (JP)**
- **Kakimizu, Akiko**
**Nishinomiya-shi (JP)**
- **Suzuki, Masaya**
**Takarazuka-shi (JP)**
- **Matsuo, Noritada**
**Itami-shi (JP)**

(74) Representative:
**Coleiro, Raymond et al**
**MEWBURN ELLIS**
**York House**
**23 Kingsway**
**London WC2B 6HP (GB)**

(56) References cited:
**DE-C- 556 932**

- **JOURNAL OF ORGANIC CHEMISTRY, vol. 23, 1958, Easton, PA (US); W.F. NEWHALL, pp. 1274-1276**
- **JOURNAL OF THE AMERICAN CHEMICAL SOCIETY, vol. 88, no. 21, 05 November 1966, Washington, DC (US); P.J. KROPP, pp. 4926-4934**
- **CENTRAL PATENTS INDEX, BASIC ABSTRACTS JOURNAL Section Ch, Week 50, 16 February 1983, Derwent Publications Ltd., London, GB, Class C, AN82-07771 J/50**
- **CHEMICAL PATENTS INDEX, DOCUMENTATION ABSTRACTS JOURNAL Section Ch, Week 8547, 22 January 1986, Derwent Publications Ltd., London, GB; Class C, AN 85-292280**
- **CHEMICAL PATENTS INDEX, DOCUMENTATION ABSTRACTS JOURNAL Section Ch, Week 8932, 4 October 1989, Derwent Publications Ltd., London, GB; Class C, AN 89-232749/32**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 476 885 B1

## Description

The present invention relates to an insect repellent containing a monoterpenediol compound as an active ingredient.

JP-A-60-199804 discloses as repellents for blood sucking insects monoterpene alcohols and diols including a p-menthane diol having respective hydroxyl groups on central carbon atoms of the isopropyl group and at the 3-position of the cyclohexane nucleus. Monohydroxyl p-menthanes having insect repellent properties are also disclosed in JP-A-57-179101 and SE-A-8704416.

Hitherto, commercially, as a repellent against blood-sucking insect pests such as mosquitoes, including Culex spp., Aedes spp. and Anopheles spp., black flies, stable flies, etc., N,N-diethyl-m-toluamide (hereinafter referred to as Deet) has been used in preparation forms such as sprays, lotions, creams, etc.

However, Deet has many disadvantages: The species of insect pests against which Deet is efficacious are limited, Deet is inferior in its efficacy against Anopheles spp. which are a vector of malaria, and Deet has an offensive odor and is soluble in resins.

In view of this, we have made extensive studies to develop an insect repellent in which these disadvantages have been overcome. As a result, we have found that a monoterpenediol compound having the following formula (I) (hereinafter referred to as the "present compound")exhibits a very high insect repellent effect,

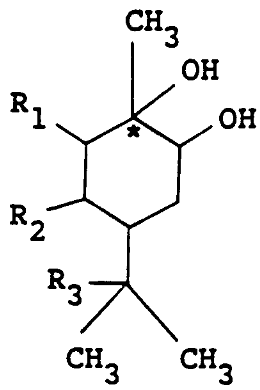

(I)

wherein $R_1$, $R_2$ and $R_3$ have any one of the following definitions:

(i) all of $R_1$, $R_2$ and $R_3$ are hydrogen,
(ii) $R_1$ is hydrogen and $R_2$ and $R_3$, taken together, form a carbon-carbon single bond, or
(iii) $R_2$ is hydrogen and $R_1$ and the group

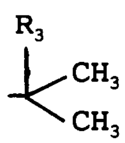

,

taken together, form an isopropylidene bridge, in which case, the hydroxyl bonded to the carbon atom marked with an asterisk takes an α-configuration referred to in stereochemistry.

Thus, the present invention provides an insect repellent composition comprising at least one of a carrier suitable for such a composition and another insect repellent and, as an active ingredient, a monoterpenediol of the above formula (I).

The present compounds are known compounds described in the literature. Particular references are specified as below.

(i) A synthetic method for preparation of a p-menthanediol compound in which all of $R_1$, $R_2$ and $R_3$ are hydrogen is described in J. Org. Chem., Vol. 23, pp. 1274-1276 (1958) and ibid., Vol. 42, pp. 2033-2037 (1977).
(ii) A synthetic method for the preparation of a caranediol in which $R_1$ is hydrogen and $R_2$ and $R_3$, taken together, form a carbon-carbon single bond is described in J. Amer. Chem. Soc., Vol. 88, pp. 4926-4934 (1966); Izv. Akad. Nauk USSR, Ser. Khim., Vol. 10, pp. 2391-2392 (1983); and Synthetic Communication, Vol. 19, pp. 1939-1943

(1989).

(iii) A synthetic method for preparation of a pinanediol, in which $R_2$ is hydrogen, $R_1$ and the group,

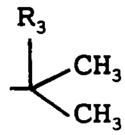

,

taken together, form an isopropylidene bridge, and the hydroxyl bonded to the carbon atom marked with an asterisk takes an $\alpha$-configuration, is described in Australian J. Chemistry, Vol. 127, pp. 2199-2204 (1974).

The above p-menthanediol, caranediol and pinanediol compounds each have stereoisomers. All these stereoisomers and their mixtures can be used as the active ingredient of the present insect repellent.

In the present compound represented by the formula (I), preferred compounds are those in which $R_1$, $R_2$, $R_3$ have either one of the following definitions:

(i) all of $R_1$, $R_2$ and $R_3$ are hydrogen, and

(ii) $R_1$ is hydrogen and $R_2$ and $R_3$ , taken together, form a carbon-carbon single bond; and more preferred compounds include:

1R,2R,4R-p-menthane-1,2-diol,
1R,2R,4S-p-menthane-1,2-diol,
1S,3S,4R,6R-carane-3,4-diol,
1S,3R,4R,6R-carane-3,4-diol and
1S,3S,4S,6R-carane-3,4-diol.

Some of the specific examples of the present compound are shown in Table 1.

Table 1

| Compound No. | Structural formula | Name of compound |
|---|---|---|
| (1) | 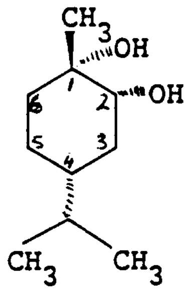 | 1S,2R,4R-p-menthane-1,2-diol |
| (2) | 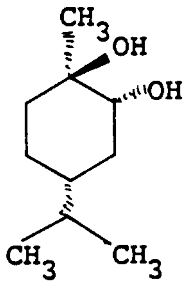 | 1R,2R,4R-p-menthane-1,2-diol |
| (3) | 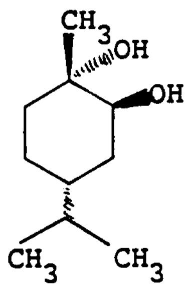 | 1S,2S,4R-p-menthane-1,2-diol |
| (4) | 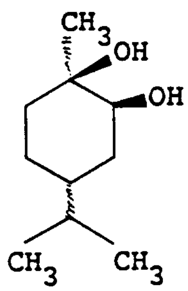 | 1R,2S,4R-p-menthane-1,2-diol |

- cont'd -

Table 1 (cont'd)

| Compound No. | Structural formula | Name of compound |
|---|---|---|
| (5) | 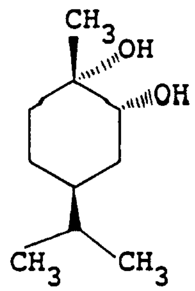 | 1S,2R,4S-p-menthane-1,2-diol |
| (6) | 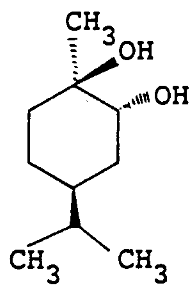 | 1R,2R,4S-p-menthane-1,2-diol |
| (7) | 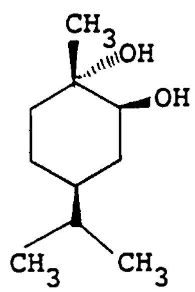 | 1S,2S,4S-p-menthane-1,2-diol |
| (8) | 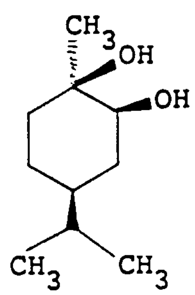 | 1R,2S,4S-p-menthane-1,2-diol |

- cont'd -

Table 1 (cont'd)

| Compound No. | Structural formula | Name of compound |
|---|---|---|
| (9) | 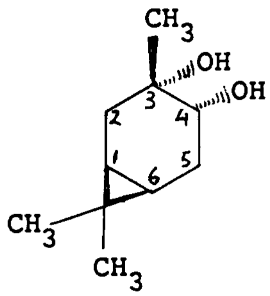 | 1S,3S,4R,6R-carane-3,4-diol |
| (10) | 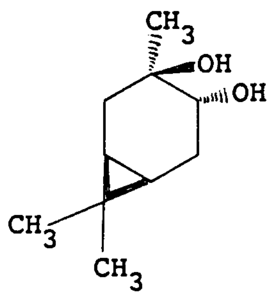 | 1S,3R,4R,6R-carane-3,4-diol |
| (11) | 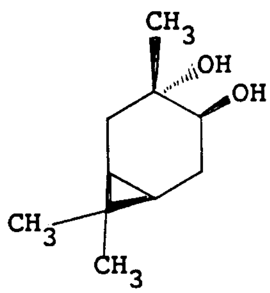 | 1S,3S,4S,6R-carane-3,4-diol |
| (12) | 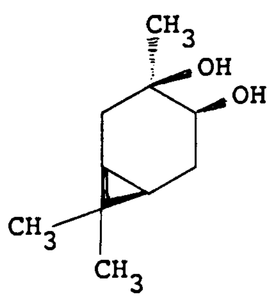 | 1S,3R,4S,6R-carane-3,4-diol |

- cont'd -

Table 1 (cont'd)

| Compound No. | Structural formula | Name of compound |
|---|---|---|
| (13) | 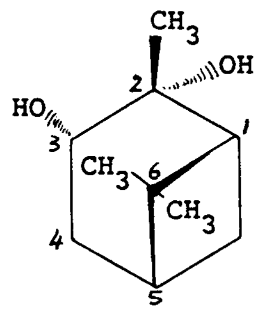 | 1R,2R,3S,5R-pinane-2,3-diol |
| (14) | 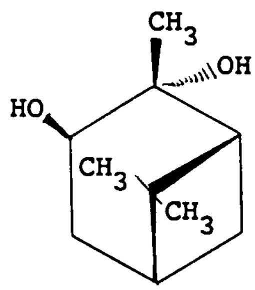 | 1R,2R,3R,5R-pinane-2,3-diol |
| (15) | 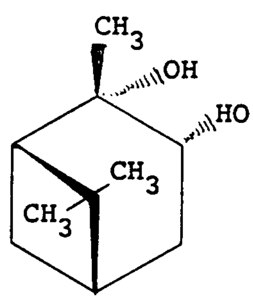 | 1S,2S,3R,5S-pinane-2,3-diol |
| (16) | 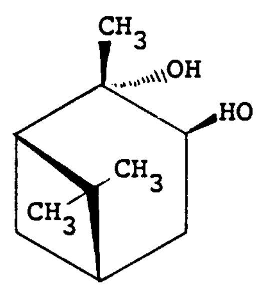 | 1S,2S,3S,5S-pinane-2,3-diol |

The insect pests against which the present compound is efficacious are blood-sucking pests, hygienic pests, etc. Specific examples of the blood-sucking pests are mosquitoes such as Anopheles spp. (e.g. Anopheles albimanus) which are a vector of malaria in tropical zones, Aedes spp. (e.g. Aedes aegypti, Aedes albopictus), Culex spp. [e.g. common mosquito (Culex pipiens pallens), Culex tritaeniorhynchus], black flies, stable flies, sand flies, Culicoides spp.,

etc. A specific example of the hygienic pests is the housefly (Musca domestica).

Some of the present compounds themselves can be used as an insect repellent. Usually, however, the present compounds are used in the form of a composition obtained by mixing with a suitable carrier (hereinafter referred to as the "present composition"). The composition includes for example liquid formulations (e.g. lotions and aerosols) and cream formulations.

Specific examples of the carriers used in preparing the liquid formulations are water, alcohols (e.g. methanol, ethanol, cetyl alcohol, glycerin and polyethylene glycol), ethers (e.g. tetrahydrofuran and dioxane), aliphatic hydrocarbons (e.g. hexane, kerosene, paraffin and petroleum benzine) and esters (e.g. ethyl acetate).

Into the liquid formulations may be incorporated common auxiliaries for formulation such as emulsifiers or dispersing agents, spreading • wetting agents, suspending agents, preservatives and propellants. Further, common film-forming agents may also be incorporated into the liquid formulations.

Specific examples of the auxiliaries are soaps, emulsifiers such as polyoxyethylene fatty acid alcohol ethers (e.g. polyoxyethylene oleyl ether), polyoxyethylene alkylaryl ethers (e.g. polyoxyethylene nonylphenyl ether), polyoxyethylene fatty acid esters, fatty acid glycerides, sorbitan fatty acid esters (e.g. polyoxyethylene sorbitan monostearate), sulfuric acid esters of a higher alcohol and sodium dodecylbenzenesulfonate; spreading • wetting agents such as glycerin and polyethylene glycol; suspending agents such as casein, gelatin, alginic acid, carboxymethyl cellulose, gum arabic, hydroxypropyl cellulose and bentonite; preservatives such as salicylic acid, methyl p-hydroxybenzoate, ethyl p-hydroxybenzoate, propyl p-hydroxybenzoate and butyl p-hydroxybenzoate; propellants such as dimethyl ether, chlorofluorocarbon and carbon dioxide gas; and various film-forming agents such as cellulose derivatives (e.g. nitrocellulose, acetylcellulose, acetylbutyrylcellulose and methyl cellulose), vinyl resins (e.g. vinyl acetate resins) and polyvinyl alcohol.

Specific examples of the carriers used in preparing cream formulations are hydrocarbons such as liquid paraffin, vaseline and paraffin; silicones such as dimethylsiloxane, colloidal silica and bentonite; alcohols such as ethanol, stearyl alcohol and lauryl alcohol; polyhydric alcohols such as polyethylene glycol, ethylene glycol and glycerin, carboxylic acids such as lauric acid and stearic acid; and esters such as beeswax and lanolin.

Into the cream formulations may be incorporated the same auxiliaries for formulation as incorporated into the liquid formulations. Further, the present compound may be used after having been microencapsulated and then formulated into lotions, aerosols, etc.

Into the present compositions may be incorporated other insect repellents, antioxidants and other additives. Specific examples of the other incorporatable insect repellents are Deet, dimethyl phthalate, 2-ethyl-1,3-hexanediol, N-octylbicycloheptane dicarboximide, p-menthane-3,8-diol, 2,3,4,5-bis($\Delta^2$-butylene)tetrahydrofurfural, di-n-propyl isocinchomeronate, di-n-butyl succinate, 2-hydroxyethyl octyl sulfide and empenthrin [1-ethynyl-2-methyl-2-pentenyl d-cis,trans-chrysanthemate (cis:trans=2:8)]. Specific examples of the antioxidants are butylhydroxyanisole, dibutylhydroxytoluene, tocopherol and $\gamma$-oryzanol.

The present compositions formulated as described above or the present compounds themselves can be applied directly to skin. Alternatively, they can be used in a method comprising applying them to a suitable sheet-form, film-form, net-form or band-form base material by treatment such as coating, impregnation, kneading or dropping, and putting the repellent-applied base material directly onto exposed areas of the skin or onto clothing.

Specific examples of the constituents of the base materials are synthetic resins such as polyethylene, polypropylene, polyvinylidene chloride, polyester, vinylon and nylon; synthetic fibers made of these resins; animal and vegetable fibers such as silk, cotton and wool; inorganic fibers such as those made of aluminum; and mixtures thereof. When a net-form base material is used, that of a finer mesh is more preferable. Generally, however, a size of about 16 or finer mesh is sufficiently effective.

The content of the present compound, an active ingredient in the present composition, varies with the preparation form and method of application. However, when the present compound is used in the form of liquid formulations (e.g. lotions and aerosols) or cream formulations, or it is applied to the base material, its content is usually 0.1 to 70% by weight, preferably 1 to 40% by weight.

When the present composition is applied to the skin, the amount of the present compound is usually 0.01 to 2 mg, preferably 0.05 to 1 mg per 1 $cm^2$ of the area of the skin. This amount is also the same when the present compound alone is used.

The amount described above varies with the type of formulations, kind and gathering density of insect pests to be repelled, time at which the present composition is applied, weathering conditions and age of persons who use the present composition. Consequently, the amount can be increased or decreased irrespective of the above range.

Embodiments of the present invention will now be illustrated more specifically with reference to the following Referential Examples, Formulation Examples and Test Examples.

Referential Example 1

Production of 1S,2R,4R-p-menthane-1,2-diol [Compound (1)]

2.54 Grams of potassium permanganate and 0.55 g of sodium hydroxide were dissolved in 45 ml of water in a 100-ml flask and cooled to 0°C. To the resulting solution were added 1.5 g of 1S,2R,4R-D-1-menthene, 10 ml of tert-butyl alcohol, 25 g of ice and 10 ml of water. After stirring for 10 minutes, the mixed solution was allowed to stand for 12 hours to complete the reaction. The reaction solution was filtered to remove the insoluble matters. The organic layer, a filtrate, was extracted with three 160-ml portions of ethyl acetate. The ethyl acetate layer was dried over anhydrous magnesium sulfate. The solvent, ethyl acetate, was distilled off to obtain 1.5 g of a crude product. The crude product was subjected to column chromatography on silica gel using a hexane/ethyl acetate (1:1) mixed solvent to obtain 1.1 g of Compound (1) having a melting point of 77° to 78°C.

Referential Example 2

Production of 1R,2R,4R-p-menthane-1,2-diol [Compound (2)] and 1R,2R,4S-p-menthane-1,2-diol [Compound (6)]

To a 100-ml eggplant-form flask were added 10 g of limonene oxide and 50 ml of a 1% aqueous sulfuric acid solution. The mixture was stirred violently. To the mixture was added 50 ml of ethyl acetate. The ethyl acetate layer was dried over anhydrous magnesium sulfate. Then, the dried ethyl acetate layer was concentrated to obtain 8 g of a reaction product. The reaction product was dissolved in 50 ml of ethyl acetate and hydrogenated with addition of 100 mg of a 5% palladium/carbon (Pd-C). The solution containing the hydrogenated reaction product was filtered to remove 5% Pd-C, dried over anhydrous magnesium sulfate and concentrated to obtain 7.8 g of a crude product. The crude product was subjected to column chromatography on silica gel using a hexane/ethyl acetate (1:1) mixed solvent to obtain 3.5 g of Compound (2) having a melting point of 85° to 87°C and 3.3 g of Compound (6) having a melting point of 64° to 65°C, separately.

Referential Example 3

Production of 1S,3S,4R,6R-carane-3,4-diol [Compound (9)]

To a 1,000-ml eggplant-form flask were added 20.45 g of 3-carene, 350 ml of tert-butyl alcohol and 150 ml of water. The mixture was cooled to 0°C with stirring. To the mixture was added by drops a solution of 35.1 g of potassium permanganate and 7.5 g of sodium hydroxide in 600 ml of water over about 1 hour with stirring the mixture and with maintaining the reaction temperature at 10°C or less. Stirring was continued at room temperature for 3 hours to complete the reaction. Therefore, the reaction solution was filtered to remove the insoluble matters. The filtrate was concentrated to 150 ml. Thereto were added 200 ml of a saturated aqueous sodium chloride solution and 500 ml of ethyl acetate. The organic layer was extracted with ethyl acetate. The ethyl acetate layer was dried over anhydrous magnesium sulfate. The solvent, ethyl acetate, was distilled off to obtain 17.0 g of a crude product. The crude product was subjected to column chromatography on silica gel using a hexane/ethyl acetate (1:1) mixed solvent to obtain 15.5 g of Compound (9) having a melting point of 69°C.

Referential Example 4

Production of 1S,3R,4R,6R-carane-3,4-diol [Compound (10)]

To a 100-ml eggplant-form flask were added 0.41 g ($3 \times 10^{-3}$ mole) of 3-carene and 20 ml of distilled water. The mixture was cooled to 0°C with violent stirring. To the mixture was added 0.57 g ($3.3 \times 10^{-3}$ mole) of m-chloroperbenzoic acid over 5 to 10 minutes. Thereafter, the resulting mixture was stirred at 20°C for 3 hours. Thereafter, 0.5 ml of 10% $H_2SO_4$ was added to the reaction solution. After stirring for 3 hours, sodium hydroxide was added to the solution until the solution became transparent. After adding sodium chloride to the transparent solution, the organic layer was extracted with three 20-ml portions of ethyl acetate. The ethyl acetate layer was dried over anhydrous magnesium sulfate and concentrated to obtain 0.40 g of a crude diol as an extract. The crude diol was recrystallized from ethyl acetate to obtain 0.35 g of Compound (10) having a melting point of 86°C.

Referential Example 5

Production of 1S,3S,4S,6R-carane-3,4-diol [Compound (11)]

To a 200-ml eggplant-form flask were added 9 g of 3-carene, 45 ml of methylene chloride and then 8.8 g of sodium hydrogencarbonate. The mixture was stirred violently. 18.2 Grams of m-chloroperbenzoic acid was added thereto over 10 to 20 minutes while cooling the mixture to 0°C. Thereafter, stirring was continued at 20°C for 3 hours. After completion of the reaction, the reaction solution was filtered to remove the precipitates. The methylene chloride layer, a filtrate, was washed with 50 ml of a saturated aqueous sodium sulfite solution and then with 50 ml of a saturated aqueous sodium hydrogencarbonate solution. The washed methylene chloride layer was dried over 5 g of anhydrous sodium sulfate. The dried layer was concentrated to obtain 9.8 g of a crude product. The crude product was subjected to column chromatography on silica gel using a hexane/ethyl acetate (20:1) mixed solvent to obtain 9.6 g of 3-carane epoxide.

9.6 Grams of 3-carane epoxide was added to 60 ml of a 2N aqueous potassium hydroxide solution. The resulting mixture was put in a pressure-proof reactor and allowed to react for 48 hours under a condition of 170°C x 5-7 kg/$cm^2$. After completion of the reaction, the organic layer was extracted with 100 ml of ethyl acetate, washed with water and dried over anhydrous magnesium sulfate. The organic layer was then filtered to remove magnesium sulfate and concentrated to obtain 8.7 g of a crude product. The crude product was subjected to column chromatography on silica gel using a hexane/ethyl acetate (3:1) mixed solvent to obtain 8.0 g of oily Compound (11).

Referential Example 6

Production of 1S,3R,4S,6R-carane-3,4-diol [Compound (12)]

To a 100-ml flask were added 2.4 g of Compound (10), 1.2 g of sodium acetate and 20 ml of methylene chloride. The mixture was cooled to 0°C with violent stirring. To the mixture was added 3.6 g of pyridinium chlorochromate over 2 hours with ice-cooling. Thereafter, the resulting mixture was stirred at room temperature for 5 hours to complete the reaction. The reaction mixture was subjected to column chromatography with 20 g of Florisil (a trade name of commercially available magnesium silicate) as a stationary phase and eluted with 100 ml of methylene chloride to obtain 1.6 g of a crude product. The crude product was subjected to column chromatography on silica gel using a hexane/ethyl acetate (4:1) mixed solvent to obtain 1.00 g of 3β-hydroxycarane-4-one.

0.16 Gram of lithium aluminum hydride was added to 5 ml of ether. The mixture was cooled to 0°C with stirring under a nitrogen gas flow. In the mixture was dissolved 1.0 g of 3β-hydroxycarane-4-one, and 3 ml of an ether solution was added dropwise thereto. The temperature of the mixed solution was returned to room temperature, and stirring was continued for 3 hours. After adding 1 ml of ethyl acetate to the stirred solution, the organic layer was washed with 5 ml of water, 5 ml of a 4N aqueous sodium hydroxide solution and 5 ml of a saturated aqueous sodium chloride solution in this order. The organic layer was dried over anhydrous magnesium sulfate and concentrated. The concentrate thus obtained was subjected to column chromatography on silica gel using a hexane/ethyl acetate (3:1) mixed solvent to obtain 0.4 g of Compound (12) as an oily product.

Referential Example 7

Production of 1R,2R,3S,5R-pinane-2,3-diol [Compound (3)]

To a 100-ml flask were added 1.17 g of potassium permanganate and 0.25 g of sodium hydroxide. The mixture was cooled to 0°C. To the cooled mixture were added 0.68 g of 1S-(-)-α-pinene, 50 ml of tert-butyl alcohol, 25 g of ice and 10 ml of water. The resulting mixture was stirred for 10 minutes and then allowed to stand for a whole day and night to complete the reaction. The reaction solution was filtered to remove the insoluble matters. The organic layer, a filtrate, was extracted with three 160-ml portions of ethyl acetate. The ethyl acetate layer was dried over anhydrous magnesium sulfate. The solvent, ethyl acetate, was distilled off to obtain 0.4 g of a crude product. The crude product was subjected to thin-layer chromatography on silica gel using a hexane/ethyl acetate (1:1) mixed solvent to obtain 0.25 g of Compound (13).

Referential Example 8

Production of 1S,2S,3R,5S-pinane-2,3-diol [Compound (15)]

The same procedure as in Referential Example 7 was repeated except that 1R-(+)-α-pinene was used in place of 1S-(-)-α-pinene, to obtain 0.26 g of Compound (15) having a melting point of 57°C.

Next, Formulation Examples will be shown. In the examples, all parts are by weight, and the present compound is shown by Compound No. in Table 1.

Formulation Example 1

Ten parts each of Compounds (1) to (16) is dissolved in a small amount of ethanol, and the solution was diluted with ethanol so that the total weight is made up to 35 parts. Each solution thus obtained is charged into an aerosol container, and a valve part is attached to the container. Thereafter, 65 parts of a freon 11/freon 12 (1:1) mixture, a propellant, is compressed into the container under pressure through the valve part. Thus, an aerosol of each Compound is obtained.

Formulation Example 2

Five parts of Compound (2) and 5 parts of Compound (6) are dissolved in a small amount of ethanol, and the solution was diluted with ethanol so that the total weight is made up to 35 parts. The solution thus obtained is charged into an aerosol container. An aerosol is obtained in the same manner as in Formulation Example 1.

Formulation Example 3

To 10 parts of Compound (10) are added 10 parts of stearic acid, 2 parts of cetyl alcohol, 1 part of lanolin, 2 parts of liquid paraffin and 62 parts of water. The mixture is melted by heating and stirred to obtain a uniform solution. 13 Parts of hot glycerin is injected into the solution, which is then thoroughly stirred to obtain a cream formulation.

Formulation Example 4

A mixture containing 6 parts of stearic acid, 0.5 part of lanolin and 6 parts of Tween 60 (a trade name of polyoxyethylene sorbitan monostearate) is heated to 80°C and injected into a 60°C mixture of 75 parts of water and 2.5 parts of salicylic acid. Immediately, 10 parts of Compound (11) is added thereto with rapid stirring to obtain a lotion.

Next, Test Examples will be shown in order to make it clear that the present compounds are useful as an active ingredient for insect repellents. The present compounds are shown by Compound No. in Table 1.

Test Example 1

A chick whose abdominal feathers had been removed with a haircutter was fixed on a wood board (7 x 15 cm) and 2.5 x 4 cm of its abdominal skin was exposed. An ethanol solution of each of the test compounds or mixture thereof (90 μl) was applied to this area. The concentration was 1500 mg/m$^2$. About five hundred adult mosquitoes which were 6 to 8 days old after emergence (Anopheles albimanus: approximately equal number of female and male) were released into a cage (21 x 21 x 30 cm) made of stainless steel and nylon gauze. The two chicks were placed in the cage and the treated areas were contacted with the nylon gauze. After 1 minute, the number of attracted mosquitoes on the treated area was counted. The same procedure with the same cage was carried out on the untreated chicks. Two cages were used in each observation. The observation was continued until the repellency (%) decreased. Repellency (%) was calculated according to the following equation.

$$\text{Repellency (\%)} = 1 - \frac{\text{No. of attracted mosquitoes at treated chicks}}{\text{No. of attracted mosquitoes at untreated chicks}} \times 100$$

Once the repellency (%) was reduced to 70% or less, the counting was terminated. Table 2 shows the result.

Table 2

| Repellent effect on Anopheles albimanus | | | |
|---|---|---|---|
| Test compound | Repellency (%) | | |
| | Immediately after treatment | After 1 hour | After 2 hours |
| (1) | 95 | 86 | 72 |
| (2) | 95 | 93 | 65 |
| 50:50 Mixture of (2) and (6) | 93 | 88 | 76 |
| (9) | 92 | 64 | - |
| (10) | 95 | 88 | 85 |
| (11) | 100 | 90 | 62 |
| (12) | 100 | 70 | - |
| (13) | 99 | 72 | 45 |
| Deet | 88 | 47 | - |

Test Example 2

A chick whose abdominal feathers had been removed with a haircutter was fixed on a wood board (7 x 15 cm) and 2.5 x 4 cm of its abdominal skin was exposed. An ethanol solution of each of the test compounds or a mixture thereof (90 µl) was applied to this area. The concentration was 1500 mg/m$^2$. About five hundred adult mosquitoes which were 6 to 8 days old after emergence (Aedes aegypti: approximately equal number of female and male) were released into a cage (21 x 21 x 30 cm) made of stainless steel and nylon gauze. The two chicks were placed in the cage and the treated areas were contacted with the nylon gauze. After 2 minutes, the number of attracted mosquitoes on the treated area was counted. The same procedure with the same cage was carried out on the untreated chicks. Two cages were used in each observation. The observation was continued until the repellency (%) decreased. Repellency (%) was calculated according to the following equation.

$$\text{Repellency (\%)} = 1 - \frac{\text{No. of attracted mosquitoes at treated chicks}}{\text{No. of attracted mosquitoes at untreated chicks}} \times 100$$

Once the repellency (%) was reduced to 70% or less, the counting was terminated. Table 3 shows the result.

Table 3

| Repellent effect on Aedes aegypti | | | | |
|---|---|---|---|---|
| Test compound | Repellency (%) | | | |
| | Immediately after treatment | After 1 hour | After 2 hours | After 3 hours |
| (1) | 100 | 95 | 83 | 72 |
| (2) | 100 | 92 | 87 | 75 |
| (6) | 95 | 93 | 92 | 89 |
| 50:50 Mixture of (2) and (6) | 100 | 100 | 95 | 92 |
| (9) | 99 | 92 | 81 | 70 |
| (10) | 96 | 93 | 71 | 65 |
| (11) | 100 | 95 | 67 | - |
| (12) | 100 | 85 | 65 | - |
| (13) | 100 | 96 | 62 | - |
| (15) | 100 | 85 | 65 | - |
| Deet | 100 | 82 | 60 | - |

## Claims

**Claims for the following Contracting States : DE, FR, GB, IT**

1. An insect repellent composition which comprises at least one of a carrier and another insect repellent and, as an active ingredient, a monoterpenediol compound having the formula,

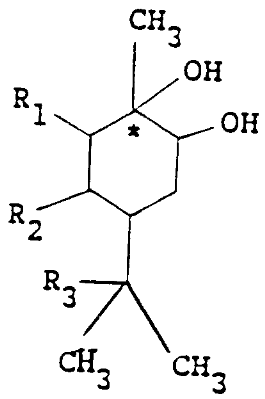

(I)

wherein $R_1$, $R_2$ and $R_3$ together have any one of the following definitions:

(i) all of $R_1$, $R_2$ and $R_3$ are hydrogen,
(ii) $R_1$ is hydrogen and $R_2$ and $R_3$, taken together, form a carbon-carbon single bond, or
(iii) $R_2$ is hydrogen and $R_1$ and the group

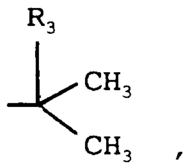

taken together, form an isopropylidene bridge, in which case, the hydroxyl bonded to the carbon atom marked with an asterisk takes an α-configuration.

2. An insect repellent composition according to claim 1, wherein the monoterpenediol compound is a compound in which all of $R_1$, $R_2$ and $R_3$ are hydrogen, so that the monoterpenediol compound has the formula (Ia)

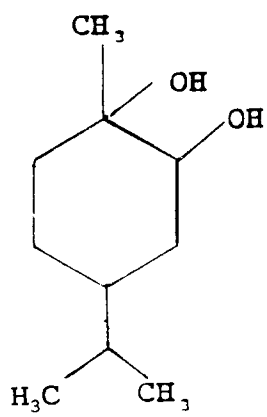

(Ia)

.

3. An insect repellent composition according to claim 2, wherein the monoterpenediol compound is 1R,2R,4R-p-menthane-1,2-diol.

4. An insect repellent composition according to claim 2, wherein the monoterpenediol compound is 1R,2R,4S-p-menthane-1,2-diol.

5. An insect repellent composition according to claim 2, wherein the monoterpenediol compound is a mixture of 1R,2R,4R-p-menthane-1,2-diol and 1R,2R,4S-p-menthane-1,2-diol.

6. An insect repellent composition according to claim 1, wherein the monoterpenediol compound is a compound in which $R_1$ is hydrogen and $R_2$ and $R_3$, taken together, form a carbon-carbon single bond, so that the monoterpenediol compound has the formula (Ib)

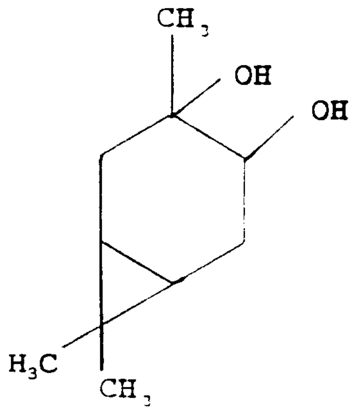

(Ib)

.

7. An insect repellent composition according to claim 6, wherein the monoterpenediol compound is 1S,3S,4R,6R-carane-3,4-diol.

8. An insect repellent composition according to claim 6, wherein the monoterpenediol compound is 1S,3R,4R,6R-carane-3,4-diol.

9. An insect repellent composition according to claim 6, wherein the monoterpenediol compound is 1S,3S,4S,6R-carane-3,4-diol.

10. An insect repellent composition according to claim 1, wherein the monoterpenediol has the formula

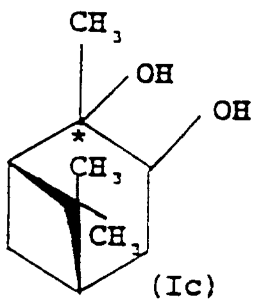

(Ic)

or

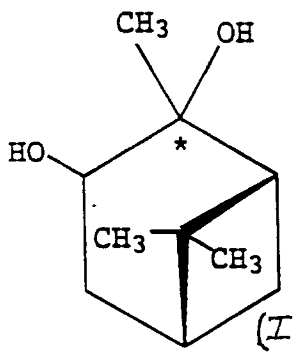

(Id)

wherein the hydroxyl bonded to the carbon atom marked with an asterisk takes an α-configuration; and the isopropylidene bridge takes a β-configuration.

11. A composition for use in the treatment of the human or animal body for repelling insects, which composition comprises a compound of the formula (I), given and defined in claim 1, and at least one of a carrier and another insect repellent.

12. A composition for use in the treatment of the human or animal body for repelling bloodsucking insects, which composition comprises a compound of the formula (I), given and defined in claim 1, and at least one of a carrier and another insect repellent.

13. A composition capable of repelling insects from a human or animal, which composition is adapted only for topical application and comprises a compound of the formula (I), given and defined in claim 1, and a dermatologically acceptable carrier.

**14.** A compound of the formula (I), given and defined in claim 1, for use in the treatment of the human or animal body for repelling insects.

**15.** A compound of the formula (I), given and defined in claim 1, for use in the treatment of the human or animal body for repelling bloodsucking insects.

**16.** Use of at least one monoterpenediol compound of the formula (I), given defined in claim 1, for application thereof to a material for covering the skin of a human or animal so as to repel insects.

**17.** Use of an insect repellent composition according to any one of claims 1 to 13 for application thereof to a material for covering the skin of a human or animal so as to repel insects.

**18.** Use of a compound of the formula (I), given and defined in claim 1, for the preparation of a composition for the treatment of the human or animal body for repelling insects.

**19.** A process for preparing an insect repellent composition which comprises mixing at least one active ingredient claimed in claim 1 with at least one of an inert carrier and another insect repellent.

**20.** A method for repelling insects which comprises:

(i) applying an insect repellent comprising as an active ingredient at least one monoterpenediol compound of the formula (I), given and defined in claim 1, to a suitable base material, and
(ii) putting the repellent-applied base material directly onto the skin or onto clothing.

**Claims for the following Contracting State : ES**

**1.** A method for repelling insects which comprises:

(a) applying to a suitable base material an insect repellent composition comprising as an active ingredient a monoterpenediol compound having the formula

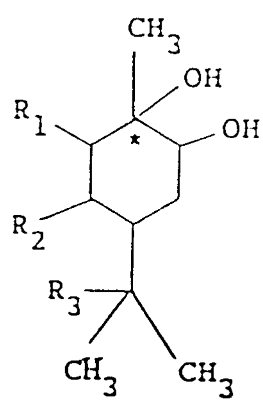

(I)

wherein $R_1$, $R_2$ and $R_3$ together have any one of the following definitions:

(i) all of $R_1$, $R_2$ and $R_3$ are hydrogen,
(ii) $R_1$ is hydrogen and $R_2$ and $R_3$, taken together, form a carbon-carbon single bond, or
(iii) $R_2$ is hydrogen and $R_1$ and the group

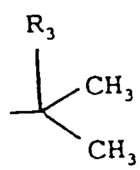

taken together, form an isopropylidene bridge, in which case, the hydroxyl bonded to the carbon atom marked with an asterisk takes an α-configuration; and

(b) putting the base material, with the applied insect repellent composition, directly onto the skin or clothing of a human or animal from which insects are to be repelled.

2. A method according to claim 1, wherein the monoterpenediol compound is a compound in which all of $R_1$, $R_2$ and $R_3$ are hydrogen, so that the monoterpenediol compound has the formula (Ia)

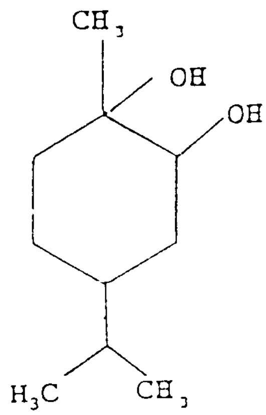

(Ia)

3. A method according to claim 2, wherein the monoterpenediol compound is 1R,2R,4R-p-menthane-1,2-diol.

4. A method according to claim 2, wherein the monoterpenediol compound is 1R,2R,4S-p-menthane-1,2-diol.

5. A method according to claim 2, wherein the monoterpenediol compound is a mixture of 1R,2R,4R-p-menthane-1,2-diol and 1R,2R,4S-p-menthane-1,2-diol.

6. A method according to claim 1, wherein the monoterpenediol compound is a compound in which $R_1$ is hydrogen and $R_2$ and $R_3$, taken together, form a carbon-carbon single bond, so that the monoterpenediol compound has the formula (Ib)

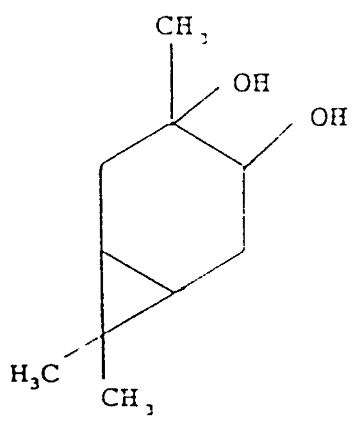

(·Ib)

7. A method according to claim 6, wherein the monoterpenediol compound is 1S,3S,4R,6R-carane-3,4-diol.

8. A method according to claim 6, wherein the monoterpenediol compound is 1S,3R,4R,6R-carane-3,4-diol.

**9.** A method according to claim 6, wherein the monoterpenediol compound is 1S,3S,4S,6R-carane-3,4 diol.

**10.** A method according to claim 1, wherein the monoterpenediol has the formula

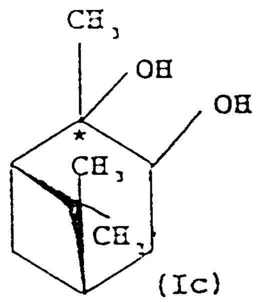

(Ic)

or

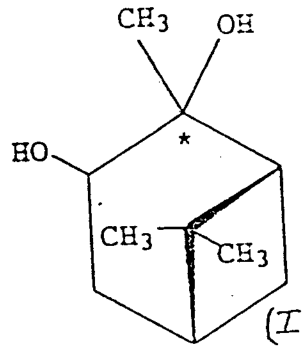

(Id)

wherein the hydroxyl bonded to the carbon atom marked with an asterisk takes an α-configuration; and the isopropylidene bridge takes a β-configuration.

**11.** An insect repellent composition which comprises a monoterpenediol compound of the type defined in any one of the preceding claims, and at least one of a carrier and another insect repellent.

**12.** An insect repellent composition according to claim 11, for use in the treatment of the human or animal body for repelling bloodsucking insects.

**13.** An insect repellent composition according to claim 11 or claim 12, which composition is adapted for topical application and comprises a monoterpenediol compound of the type defined in any one of claims 1-10 and a dermatologically acceptable carrier.

**14.** Use of at least one monoterpenediol compound of the type defined in any one of claims 1-10, for application to a material for covering the skin of a human or animal so as to repel insects therefrom.

**15.** Use of an insect repellent composition according to any one of claims 11 to 13 for application to a material for covering the skin of a human or animal so as to repel insects therefrom.

**16.** Use of a monoterpenediol compound of the type defined in any one of claims 1-10, for the preparation of a composition for the treatment of the human or animal body for repelling insects.

**17.** A process for preparing an insect repellent composition which comprises mixing (i) as an active ingredient a monoterpenediol compound of the type defined in any one of claims 1-10 with (ii) at least one of an inert carrier and another insect repellent.

**Patentansprüche**

**Patentansprüche für folgende Vertragsstaaten : DE, FR, GB, IT**

**1.** Mittel zur Insektenabwehr, umfassend mindestens einen Träger und/oder ein anderes Mittel zur Insektenabwehr, und als Wirkstoff eine Monoterpendiolverbindung der Formel

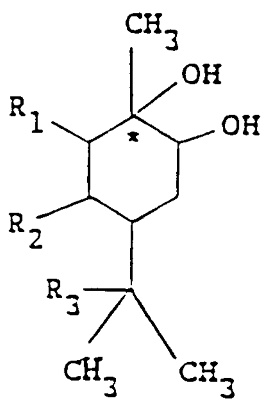

(I)

in der $R_1$, $R_2$ und $R_3$ zusammen eine der folgenden Definitionen aufweisen:

(i) alle Reste $R_1$, $R_2$ und $R_3$ sind Wasserstoffatome,
(ii) $R_1$ ist ein Wasserstoffatom und $R_2$ und $R_3$ bilden zusammen eine Kohlenstoff-Koldenstoff-Einfachbindung oder
(iii) $R_2$ ist ein Wasserstoffatom und $R_1$ und der Rest

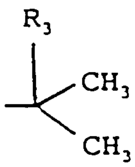

zusammen bilden eine Isopropylidenbrücke, wobei in dem Fall die an das mit einem Stern markierte Kohlenstoffatom gebundene Hydroxylgruppe eine α-Konfiguration einnimmt.

2. Mittel zur Insektenabwehr nach Anspruch 1, in dem die Monoterpendiolverbindung eine Verbindung ist, in der alle Reste $R_1$, $R_2$ und $R_3$ Wasserstoffatome sind, sodaß die Monoterpendiolverbindung die Formel (Ia) aufweist.

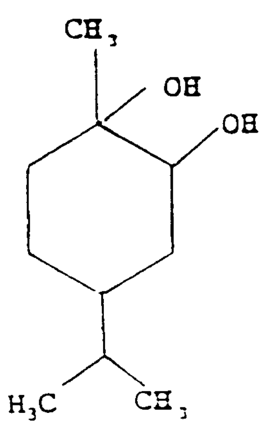

(Ia)

3. Mittel zur Insektenabwehr nach Anspruch 2, in dem die Monoterpendiolverbindung 1R,2R,4R-p-Menthan-1,2-diol ist.

4. Mittel zur Insektenabwehr nach Anspruch 2, in dem die Monoterpendiolverbindung 1R,2R,4S-p-Menthan-1,2-diol ist.

5. Mittel zur Insektenabwehr nach Anpruch 2, in dem die Monoterpendiolverbindung ein Gemisch aus 1R,2R,4R-p-Menthan-1,2-diol und 1R,2R,4S-p-Menthan-1,2-diol ist.

6. Mittel zur Insektenabwehr nach Anspruch 1, in dem die Monoterpendiolverbindung eine Verbindung ist, in der $R_1$ ein Wasserstoffatom ist und $R_2$ und $R_3$ zusammen eine Kohlenstoff-Kohlenstoff-Einfachbindung bilden, sodaß die Monoterpendiolverbindung die Formel (Ib) aufweist.

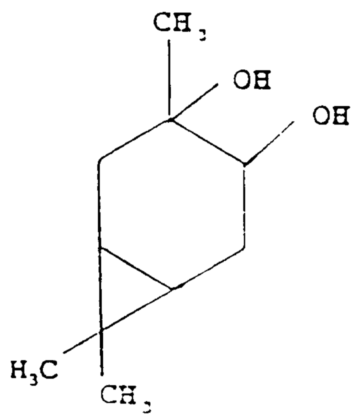

(Ib)

7. Mittel zur Insektenabwehr nach Anspruch 6, in dem die Monoterpendiolverbindung 1S,3S,4R,6R-Caran-3,4-diol ist.

8. Mittel zur Insektenabwehr nach Anspruch 6, in dem die Monoterpendiolverbindung 1S,3R,4R,6R-Caran-3,4-diol ist.

9. Mittel zur Insektenabwehr nach Anspruch 6, in dem die Monoterpendiolverbindung 1S,3S,4S,6R-Caran-3,4-diol ist.

10. Mittel zur Insektenabwehr nach Anspruch 1, in dem die Monoterpendiolverbindung die Formel

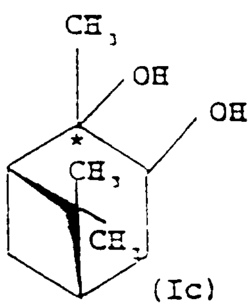

(Ic)

oder

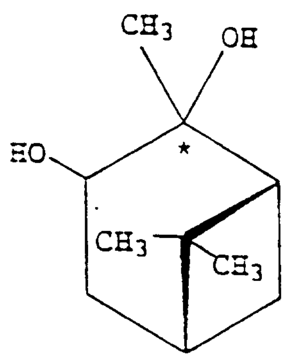

(Id)

aufweist, wobei die an das mit einem Stern markierte Kohlenstoffatom gebundene Hydroxylgruppe eine α-Konfiguration einnimmt; und
die Isopropylidenbrücke eine β-Konfiguration einnimmt.

11. Mittel zur Verwendung bei der Behandlung des menschlichen oder tierischen Körpers zur Abwehr von Insekten, wobei das Mittel eine Verbindung der Formel (I), angegeben und definiert in Anspruch 1, und mindestens einen Träger und/oder ein anderes Mittel zur Insektenabwehr umfaßt.

12. Mittel zur Verwendung bei der Behandlung des menschlichen oder tierischen Körpers zur Abwehr von blutsaugenden Insekten, wobei das Mittel eine Verbindung der Formel (I), angegeben und definiert in Anspruch 1, und mindestens einen Träger und/oder ein anderes Mittel zur Insektenabwehr umfaßt.

**13.** Mittel, das zur Abwehr von Insekten von einem Menschen oder Tier fähig ist, wobei das Mittel nur für topische Anwendung geeignet ist und eine Verbindung der Formel (I), angegeben und definiert in Anspruch 1, und einen dermatologisch verträglichen Träger umfaßt.

**14.** Verbindung der Formel (I), angegeben und definiert in Anspruch 1, zur Verwendung bei der Behandlung des menschlichen oder tierischen Körpers zur Abwehr von Insekten.

**15.** Verbindung der Formel (I), angegeben und definiert in Anspruch 1, zur Verwendung bei der Behandlung des menschlichen oder tierischen Körpers zur Abwehr blutsaugender Insekten.

**16.** Verwendung mindestens einer Monoterpendiolverbindung der Formel (I), angegeben und definiert in Anspruch 1, zur Anwendung auf ein Material zum Bedecken der Haut eines Menschen oder Tiers, um so Insekten abzuwehren.

**17.** Verwendung eines Mittels zur Insektenabwehr nach einem der Ansprüche 1 bis 13 zur Anwendung auf ein Material zum Bedecken der Haut eines Menschen oder Tiers, um so Insekten abzuwehren.

**18.** Verwendung einer Verbindung der Formel (I), angegeben und definiert in Anspruch 1, zur Herstellung eines Mittels zur Behandlung des menschlichen oder tierischen Körpers zur Abwehr von Insekten.

**19.** Verfahren zur Herstellung eines Mittels zur Insektenabwehr, umfassend das Mischen mindestens eines Wirkstoffs nach Anspruch 1 mit mindestens einem inerten Träger und/oder einem anderen Mittel zur Insektenabwehr.

**20.** Verfahren zur Insektenabwehr, umfassend:

(i) Aufbringen eines Mittels zur Insektenabwehr, umfassend als Wirkstoff mindestens eine Monoterpendiolverbindung der Formel (I), angegeben und definiert in Anspruch 1, auf ein geeignetes Grundmaterial, und
(ii) Aufbringen des Grundmaterials mit aufgebrachtem Insektenabwehrmittel direkt auf die Haut oder auf die Kleidung.

**Patentansprüche für folgenden Vertragsstaat: ES**

**1.** Verfahren zur Insektenabwehr, umfassend:

(a) Aufbringen eines Mittels zur Insektenabwehr, umfassend als Wirkstoff eine Monoterpendiolverbindung der Formel

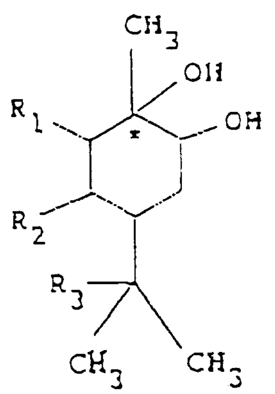

(I)

in der $R_1$, $R_2$ und $R_3$ zusammen eine der folgenden Definitionen aufweisen:

(i) alle Reste $R_1$, $R_2$ und $R_3$ sind Wasserstoffatome,
(ii) $R_1$ ist ein Wasserstoffatom und $R_2$ und $R_3$ bilden zusammen eine Kohlenstoff-Kohlenstoff-Einfachbindung oder

(iii) $R_2$ ist ein Wasserstoffatom und $R_1$ und der Rest

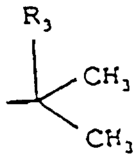

zusammen bilden eine Isopropylidenbrücke, wobei in dem Fall die an das mit einem Stern markierte Kohlenstoffatom gebundene Hydroxylgruppe eine α-Konfiguration einnimmt, auf ein geeignetes Grundmaterial; und

(b) Aufbringen des Grundmateriais mit aufgebrachtem Insektenabwehrmittel direkt auf die Haut oder auf die Kleidung eines Menschen oder Tieres, von dem die Insekten abgewehrt werden sollen.

**2.** Verfahren nach Anspruch 1, in dem die Monoterpendiolverbindung eine Verbindung ist, in der alle Reste $R_1$, $R_2$ und $R_3$ Wasserstoffatome sind, sodaß die Monoterpendiolverbindung die Formel (Ia) aufweist:

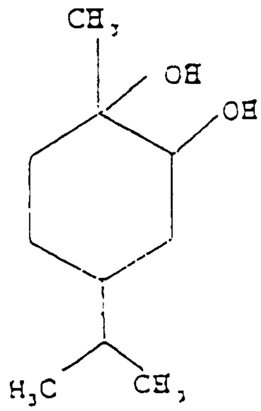

(Ia)

**3.** Verfahren nach Anspruch 2, in dem die Monoterpendiolverbindung 1R,2R,4R-p-Menthan-1,2-diol ist.

**4.** Verfahren nach Anspruch 2, in dem die Monoterpendiolverbindung 1R,2R,4S-p-Menthan-1,2-diol ist.

**5.** Verfahren nach Anspruch 2, in dem die Monoterpendiolverbindung ein Gemisch aus 1R,2R,4R-p-Menthan-1,2-diol und 1R,2R,4S-p-Menthan-1,2-diol ist.

**6.** Verfahren nach Anspruch 1, in dem die Monoterpendiolverbindung eine Verbindung ist, in der $R_1$ ein Wasserstoffatom ist und $R_2$ und $R_3$ zusammen eine Kohlenstoff-Kohlenstoff-Einfachbindung bilden, sodaß die Monoterpendiolverbindung die Formel (Ib) aufweist.

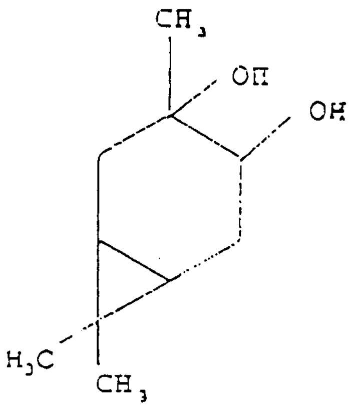

(Ib)

7. Verfahren nach Anspruch 6, in dem die Monoterpendiolverbindung 1S,3S,4R,6R-Caran-3,4-diol ist.

8. Verfahren nach Anspruch 6, in dem die Monoterpendiolverbindung 1S,3R,4R,6R-Caran-3,4-diol ist.

9. Verfahren nach Anspruch 6, in dem die Monoterpendiolverbindung 1S,3S,4S,6R-Caran-3,4-diol ist.

10. Verfahren nach Anspruch 1, in dem die Monoterpendiolverbindung die Formel

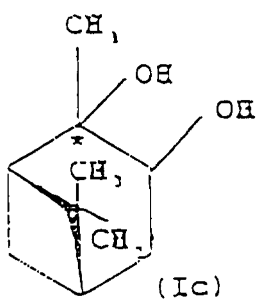

(Ic)

oder

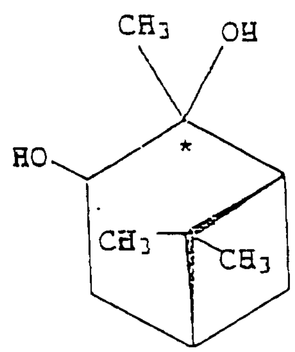

(Id)

aufweist, wobei die an das mit einem Stern markierte Kohlenstoffatom gebundene Hydroxylgruppe eine α-Konfiguration einnimmt; und
die Isopropylidenbrücke eine β-Konfiguration einnimmt.

11. Mittel zur Insektenabwehr, umfassend eine Monoterpendiolverbindung des in einem der vorangehenden Ansprüche angegebenen Typs und mindestens einen Träger und/oder ein anderes Mittel zur Insektenabwehr.

12. Mittel Zur Insektenabwehr nach Anspruch 11 zur Verwendung bei der Behandlung des menschlichen oder tierischen Körpers zur Abwehr blutsaugender Insekten.

13. Mittel zur Insektenabwehr nach Anspruch 11 oder Anspruch 12, wobei das Mittel für topische Anwendung geeignet ist und eine Monoterpendiolverbindung des in einem der Ansprüche 1 - 10 definierten Typs und einen dermatologisch verträglichen Träger umfaßt.

14. Verwendung mindestens einer Monoterpendiolverbindung des in einem der Ansprüche 1 bis 10 definierten Typs zur Anwendung auf ein Material zum Bedecken der Haut eines Menschen oder Tiers, um so Insekten abzuwehren.

15. Verwendung eines Mittels zur Insektenabwehr nach einem der Ansprüche 11 bis 13 zur Anwendung auf ein Material zum Bedecken der Haut eines Menschen oder Tiers, um so Insekten abzuwehren.

16. Verwendung einer Monoterpendiolverbindung des in einem der Ansprüche 1 bis 10 definierten Typs zur Herstellung eines Mittels zur Behandlung des menschlichen oder tierischen Körpers zur Abwehr von Insekten.

17. Verfahren zur Herstellung eines Mittels zur Insektenabwehr, umfassend das Mischen von (i) einer Monoterpendiolverbindung des in einem der Ansprüche 1 bis 10 definierten Typs als Wirkstoff mit (ii) mindestens einem inerten Träger und/oder einem anderen Mittel zur Insektenabwehr.

**Revendications**

**Revendications pour les Etats contractants suivants : DE, FR, GB, IT**

1. Composition insectifuge qui comprend au moins l'un d'un support et d'un autre agent insectifuge et, comme ingrédient actif, un dérivé de monoterpènediol répondant à la formule

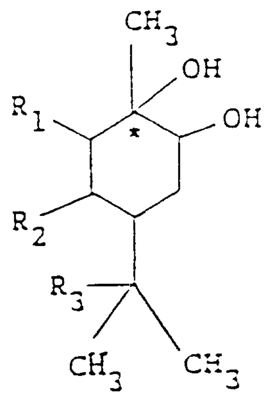

(I)

dans laquelle $R_1$, $R_2$ et $R_3$ ensemble ont l'une quelconque des définitions suivantes :

(i) $R_1$, $R_2$ et $R_3$ représentent chacun un atome d'hydrogène,
(ii) $R_1$ représente un atome d'hydrogène, et $R_2$ et $R_3$, pris ensemble, forment une liaison simple carbone-carbone, ou
(iii) $R_2$ représente un atome d'hydrogène, et $R_1$ et le groupe

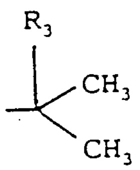

,

pris ensemble, forment un pont isopropylidène, auquel cas le groupement hydroxyle lié à l'atome de carbone marqué d'un astérisque prend une configuration $\alpha$.

2. Composition insectifuge selon la revendication 1, dans laquelle le dérivé de monoterpènediol est un composé dans lequel $R_1$, $R_2$ et $R_3$ représentent chacun un atome d'hydrogène, de sorte que le dérivé de monoterpènediol répond à la formule (Ia)

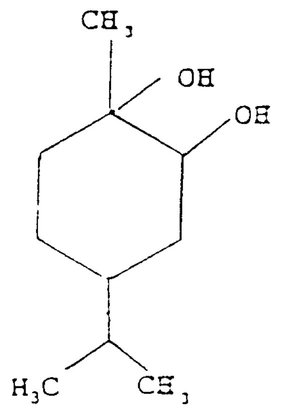

(Ia)

3. Composition insectifuge selon la revendication 2, dans laquelle le dérivé de monoterpènediol est le 1R,2R,4R-p-menthane-1,2-diol.

4. Composition insectifuge selon la revendication 2, dans laquelle le dérivé de monoterpènediol est le 1R,2R,4S-p-menthane-1,2-diol.

5. Composition insectifuge selon la revendication 2, dans laquelle le dérivé de monoterpènediol est un mélange de 1R,2R,4R-p-menthane-1,2-diol et de 1R,2R,4S-p-menthane-1,2-diol.

6. Composition insectifuge selon la revendication 1, dans laquelle le dérivé de monoterpènediol est un composé dans lequel $R_1$ représente un atome d'hydrogène, et $R_2$ et $R_3$, pris ensemble, forment une liaison simple carbone-carbone, de sorte que le dérivé de monoterpènediol répond à la formule (Ib)

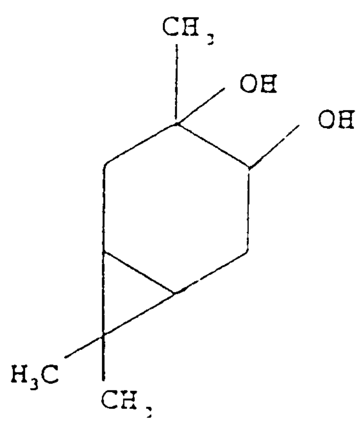

(Ib)

7. Composition insectifuge selon la revendication 6, dans laquelle le dérivé de monoterpènediol est le 1S,3S,4R,6R-carane-3,4-diol.

8. Composition insectifuge selon la revendication 6, dans laquelle le dérivé de monoterpènediol est le 1S,3R,4R,6R-carane-3,4-diol.

9. Composition insectifuge selon la revendication 6, dans laquelle le dérivé de monoterpènediol est le 1S,3S,4S,6R-carane-3,4-diol.

10. Composition insectifuge selon la revendication 1, dans laquelle le monoterpènediol répond à la formule

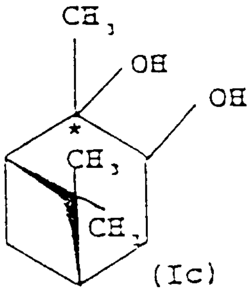 (Ic) ou 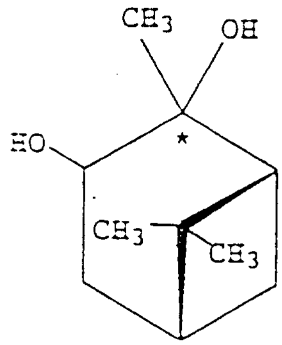 (Id)

dans laquelle le groupement hydroxyle lié à l'atome de carbone marqué d'un astérisque prend une configuration α; et le pont isopropylidène prend une configuration β.

**11.** Composition destinée à être utilisée dans le traitement du corps humain ou animal pour repousser les insectes, ladite composition comprenant un composé de formule (I), donnée et définie dans la revendication 1, et au moins l'un d'un support et d'un autre agent insectifuge.

**12.** Composition destinée à être utilisée dans le traitement du corps humain ou animal pour repousser les insectes hématophages, ladite composition comprenant un composé de formule (I), donnée et définie dans la revendication 1, et au moins l'un d'un support et d'un autre agent insectifuge.

**13.** Composition capable de repousser les insectes d'un être humain ou d'un animal, ladite composition n'étant adaptée qu'à une application topique et comprenant un composé de formule (I), donnée et définie dans la revendication 1, et un support acceptable sur le plan dermatologique.

**14.** Composé de formule (I), donnée et définie dans la revendication 1 destiné à être utilisé dans le traitement du corps humain ou animal pour repousser les insectes.

**15.** Composé de formule (I), donnée et définie dans la revendication 1, destiné à être utilisé dans le traitement du corps humain ou animal pour repousser les insectes hématophages.

**16.** Utilisation d'au moins un dérivé de monoterpènediol de formule (I), donnée et définie dans la revendication 1, pour son application sur un matériau permettant de couvrir la peau d'un être humain ou d'un animal de façon à repousser les insectes.

**17.** Utilisation d'une composition insectifuge selon l'une quelconque des revendications 1 à 13, pour son application sur un matériau permettant de couvrir la peau d'un être humain ou d'un animal de façon à repousser les insectes.

**18.** Utilisation d'un composé de formule (I), donné et défini dans la revendication 1, pour la préparation d'une composition permettant le traitement du corps humain ou animal pour repousser les insectes.

**19.** Procédé de préparation d'une composition insectifuge qui comprend le mélange d'au moins un ingrédient actif selon la revendication 1 avec au moins l'un d'un support inerte et d'un autre agent insectifuge.

**20.** Procédé permettant de repousser les insectes, qui comprend :

(i) l'application d'un agent insectifuge comprenant comme ingrédient actif au moins un dérivé de monoterpènediol de formule (I), donnée et définie dans la revendication 1, sur un matériau de support approprié, et
(ii) la mise en place du matériau de support sur laquelle l'agent répulsif a été déposé, directement sur la peau ou sur un vêtement.

**Revendications pour l'Etat contractant suivant : ES**

**1.** Procédé pour repousser les insectes qui consiste

a) à appliquer à un matériau de support une composition insectifuge qui comprend comme ingrédient actif un dérivé de monoterpènediol répondant à la formule

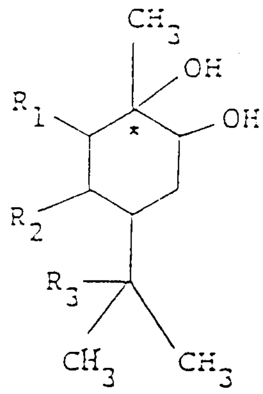

(I)

dans laquelle $R_1$, $R_2$ et $R_3$ ensemble ont l'une quelconque des définitions suivantes :

(i) $R_1$, $R_2$ et $R_3$ représentent chacun un atome d'hydrogène,
(ii) $R_1$ représente un atome d'hydrogène, et $R_2$ et $R_3$, pris ensemble, forment une liaison simple carbone-carbone, ou
(iii) $R_2$ représente un atome d'hydrogène, et $R_1$ et le groupe

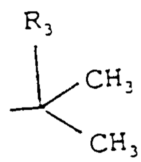

pris ensemble, forment un pont isopropylidène, auquel cas le groupement hydroxyle lié à l'atome de carbone marqué d'un astérisque prend une configuration $\alpha$; et

b) à mettre en place du matériau de support, sur lequel a été appliquée la composition insectifuge, directement sur la peau ou sur un vêtement d'un être humain ou un animal de qui il faut repousser les insectes.

**2.** Procédé selon la revendication 1, dans lequel le dérivé de monoterpènediol est un composé dans lequel $R_1$, $R_2$ et $R_3$ représentent chacun un atome d'hydrogène, de sorte que le dérivé de monoterpènediol répond à la formule (Ia)

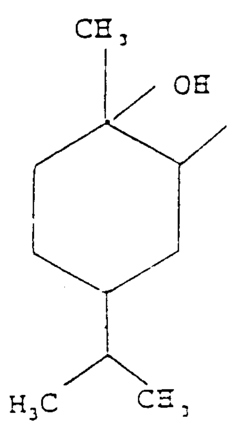

(Ia)

**3.** Procédé selon la revendication 2, dans lequel le dérivé de monoterpènediol est le 1R,2R,4R-p-menthane-1,2-diol.

**4.** Procédé selon la revendication 2, dans lequel le dérivé de monoterpènediol est le 1R,2R,4S-p-menthane-1,2-diol.

**5.** Procédé selon la revendication 2, dans lequel le dérivé de monoterpènediol est un mélange de 1R,2R,4R-p-menthane-1,2-diol et de 1R,2R,4S-p-menthane-1,2-diol.

**6.** Procédé selon la revendication 1, dans lequel le dérivé de monoterpènediol est un composé dans lequel $R_1$ représente un atome d'hydrogène, et $R_2$ et $R_3$, pris ensemble, forment une liaison simple carbone-carbone, de sorte que le dérivé de monoterpènediol répond à la formule (Ib)

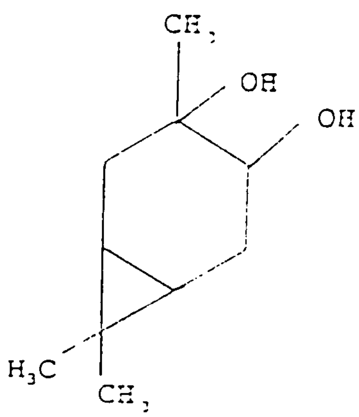

(Ib)

**7.** Procédé selon la revendication 6, dans lequel le dérivé de monoterpènediol est le 1S,3S,4R,6R-carane-3,4-diol.

**8.** Procédé selon la revendication 6, dans lequel le dérivé de monoterpènediol est le 1S,3R,4R,6R-carane-3,4-diol.

**9.** Procédé selon la revendication 6, dans lequel le dérivé de monoterpènediol est le 1S,3S,4S,6R-carane-3,4-diol.

**10.** Procédé selon la revendication 1, dans lequel le monoterpènediol répond à la formule

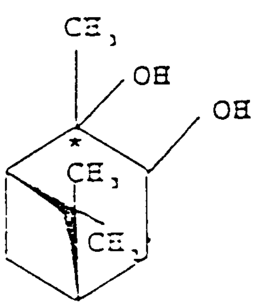

(Ic) ou

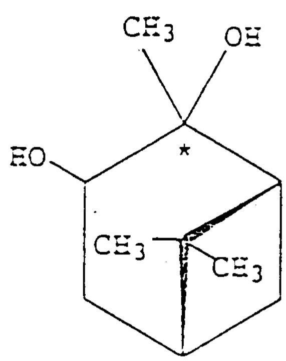

(Id)

dans laquelle le groupement hydroxyle lié à l'atome de carbone marqué d'un astérisque prend une configuration α; et le pont isopropylidène prend une configuration β.

**11.** Composition insectifuge comprenant un dérivé de monoterpènediol du type défini dans l'une quelconque des revendications précédentes, et au moins l'un d'un support et d'un autre agent insectifuge.

**12.** Composition insectifuge selon la revendication 11, destinée à être utilisée dans le traitement du corps humain ou animal pour repousser les insectes hématophages.

13. Composition insectifuge selon la revendication 11 ou la revendication 12, ladite composition étant adaptée à une application topique et comprenant un dérivé de monoterpènediol du type défini dans l'une quelconque des revendications 1 à 10, et un support acceptable sur le plan dermatologique.

14. Utilisation d'au moins un dérivé de monoterpènediol du type défini dans l'une quelconque des revendications 1 à 10, pour son application sur un matériau permettant de couvrir la peau d'un être humain ou d'un animal de façon à en repousser les insectes.

15. Utilisation d'une composition insectifuge selon l'une quelconque des revendications 11 à 13, pour son application sur un matériau permettant de couvrir la peau d'un être humain ou d'un animal de façon à en repousser les insectes.

16. Utilisation d'un dérivé de monoterpènediol du type défini dans l'une quelconque des revendications 1 à 10, pour la préparation d'une composition permettant le traitement du corps humain ou animal pour repousser les insectes.

17. Procédé de préparation d'une composition insectifuge qui consiste à mélanger (i), comme ingrédient actif, un dérivé de monoterpènediol du type défini dans l'une quelconque des revendications 1 à 10 avec (ii) au moins l'un d'un support inerte et d'un autre agent insectifuge.